# EUROPÄISCHE PATENTSCHRIFT

(11) **EP 0 985 260 B1**
(45) Veröffentlichungstag und Bekanntmachung des Hinweises auf die Patenterteilung: **05.09.2001**
(21) Anmeldenummer: 98934745.5
(22) Anmeldetag: 18.05.1998
(51) Int. Cl.: H02J 1/10

(54) **SCHALTUNGSANORDNUNG EINER GEKOPPELTEN, LINEAR NACHGEREGELTE AUSGANGSSPANNUNGEN LIEFERNDEN STROMVERSORGUNGSEINHEIT**
CIRCUIT FOR A COUPLED, LINEARLY RE-ADJUSTED ELECTRICITY SUPPLY UNIT SUPPLYING OUTPUT VOLTAGES
CIRCUIT DE COMMUTATION POUR UNITE D'ALIMENTATION EN COURANT FOURNISSANT DES TENSIONS DE SORTIE COUPLEES ET RAJUSTEES DE MANIERE LINEAIRE

(30) Priorität: 27.05.1997 DE 19722127
(43) Veröffentlichungstag der Anmeldung: 15.03.2000
(73) Patentinhaber: Fujitsu Siemens Computers GmbH, 81739 München (DE)
(72) Erfinder: BUSCH, Peter, D-86179 Augsburg (DE)
(74) Vertreter: Epping, Wilhelm, Dipl.-Ing.
(86) Internationale Anmeldenummer: DE9801372
(87) Internationale Veröffentlichungsnummer: WO9854814

(56) Entgegenhaltungen:
- DE-C- 19 506 405
- US-A- 4 877 972
- US-A- 5 598 041

## Beschreibung

Die Erfindung betrifft eine Schaltungsanordnung einer eine gekoppelte, linear nachgeregelte Ausgangsspannungen liefernden Stromversorgungseinheit gemäß dem Oberbegriff des Anspruchs 1.

Computeranlagen oder Personalcomputer mit hoher Datenverarbeitungsleistung erfordern mehr und mehr Stromversorgungssysteme mit hohen Leistungen. Zur Anwendung kommen Stromversorgungssysteme, die mit gleichartigen Stromversorgungseinheiten aufgebaut sind, die parallel zusammenschaltbar sind, um so einerseits nur einen Typ von Stromversorgungseinheit zu haben, andererseits aber trotzdem jeweils gemäß den Anforderungen den Strombedarf decken zu können. Es reicht aber nicht mehr aus, nur den Strombedarf zu decken. Es muss auch sichergestellt werden, dass eine gleichmäßige Aufteilung der Stromanteile, die die Stromversorgungseinheiten jeweils zu einem Gesamtstrom liefern, gegeben ist. Dadurch wird eine gleichmäβige Belastung und damit eine möglichst lange Lebensdauer der Stromversorgungseinheiten erzielt. Weiter wird aber auch eine Redundanz in dem Stromversorgungssystem verlangt, so dass, wenn doch einmal eine Stromversorgungseinheit ausfällt, das Stromversorgungssystem weiterhin ohne Ausfall oder Einbruch der Systemspannungen die Computeranlage oder den Personalcomputer betreibt.

Aus der den Oberbegriff des Anspruchs 1 belegenden Druckschrift DE 195 06 405 C1 ist eine Stromversorgungseinrichtung bekannt, die mit gleichartigen, gekoppelte, linear nachgeregelte Ausgangsspannungen liefernden Stromversorgungseinheiten aufgebaut ist. Die einzelne Stromversorgungseinheit erfüllt dabei die oben genannten Kriterien. Sie ist parallel zu einem redundanten Stromversorgungssystem zusammenschaltbar mit einer auf die jeweiligen Stromversorgungseinheiten gleichmäßigen Aufteilung der Ausgangsstromanteile. Um auch eine Redundanz z.B. bei einem Ausgangskurzschluss einer defekten Stromversorgungseinheit zu erhalten, sind die Ausgänge der Stromversorgungseinheiten mit z.B. Schottkydioden von den Systemeingängen der Computeranlage oder des Personalcomputers entkoppelt. Bei einer um 1 größeren Anzahl von Stromversorgungseinheiten in einem Stromversorgungssystem als tatsächlich zur Bildung des Stromversorgungssystems notwendig ist, wird ein redundantes Stromversorgungssystem erhalten, bei dem defekte Stromversorgungseinheiten während des Betriebs getauscht werden können.

Nachteilig bei der bekannten Stromversorgungseinheit ist, dass bei Ausfall einer noch nicht nachgeregelten gekoppelten Ausgangsspannung durch einen Defekt des Hauptteils der Stromversorgungseinheit oder bei einem, den Nachregeltransistor für diese gekoppelte Ausgangsspannung steuernden defekten Stromregler derart, dass die Ausgangsspannung des Stromreglers gegen Null geht, das damit aufgebaute Stromversorgungssystem zumindest für diese Ausgangsspannung insgesamt ausfällt. Der Grund dafür sind die Vorkehrungen, die getroffen sind, um eine gleichmäßige Stromaufteilung auf die einzelnen Stromversorgungseinheiten innerhalb des Stromversorgungssystems zu realisieren. Im Detail ist hier die gemeinsame Parallelsteuerbusleitung erwähnt, auf der eine elektrische Führungsgröße erzeugt ist, die ein Maß für einen gemittelten Sollstrom darstellt und die von den einzelnen Stromversorgungseinheiten herangezogen wird, um ihren Ausgangsstrom entsprechend einzuregeln. Alle nicht defekten Stromversorgungseinheiten, denen nunmehr ein erhöhter Strom abverlangt wird, denen aber über die gemeinsame Parallelsteuerbusleitung mitgeteilt wird, dass kein erhöhter Strom benötigt wird, regeln deshalb mit der defekten Stromversorgungseinheit herunter, bis das Stromversorgungssystem ausgefallen ist.

Aufgabe der vorliegenden Erfindung ist daher, eine Schaltungsanordnung einer Stromversorgungseinheit der eingangs genannten in der Weise zu verbessern, dass trotz des Ausfalls einer noch nicht nachgeregelten gekoppelten Ausgangsspannung oder des Ausfalls eines, den Nachregeltransistor für diese Ausgangsspannung steuernden Stromreglers ein mit solchen Stromversorgungseinheiten aufgebautes Stromversorgungssystem betriebsfähig bleibt.

Gelöst wird diese Aufgabe durch die Merkmale, die im kennzeichnenden Teil des Anspruchs 1 angegeben sind.

Danach hat die Stromversorgungseinheit ein Ausgangsspannungsregelfenster durch Hinzufügen eines Spannungsreglers mit entsprechender Widerstandsbeschaltung erhalten.

Der Stromregler bestimmt nicht mehr direkt die Ansteuerung des Nachregeltransistors und damit die Ausgangsspannung der Stromversorgungseinheit, sondern bestimmt nun nur noch die Sollspannung für den hinzugefügten Spannungsregler innerhalb eines durch eine Referenzspannung, verschiedene Widerstände und der Ausgangsspannung des Stromreglers eingestellten Toleranzfensters.

Durch Vergleich der auf diese Weise erzeugten Sollspannung mit der auf einer gemeinsamen Verbindungsleitung erzeugten gemeinsamen Ausgangsspannung des Stromversorgungssystems bestimmt dann der hinzugefügte Spannungsregler die Ausgangsspannung der Stromversorgungseinheit.

Fällt nun eine gekoppelte Ausgangsspannung oder der, den Nachregeltransistor für diese Ausgangsspannung steuernde Stromregler in einer parallelgeschalteten Stromversorgungseinheit aus, kann dies bei allen parallelgeschalteten Stromversorgungseinheiten nur zu einer Ausgangsspannungsänderung innerhalb des durch den hinzugefügten Spannungsregler eingeführten Toleranzfensters führen. Das Toleranzfenster muss größer sein als die zu erwartenden Toleranzen der minimalen Eingangsspannung, der Referenzspannung und sonstiger die Ausgangsspannung beeinflussenden Spannungen.

Eine vorteilhafte Ausgestaltung der Erfindung ist Gegenstand eines Unteranspruchs.

Wird das Toleranzfenster in der Weise eingestellt, dass es kleiner als die spezifizierte Ausgangsspannungstoleranz ist, wird auch bei ausfallendem Einzelregler der spezifizierte Ausgangsspannungsbereich nicht verlassen. Gleichzeitig kann durch geeignete Wahl dieses Toleranzfensters eine Ausgangsspannungsbegrenzung bei der betroffenen Ausgangsspannung erhalten werden.

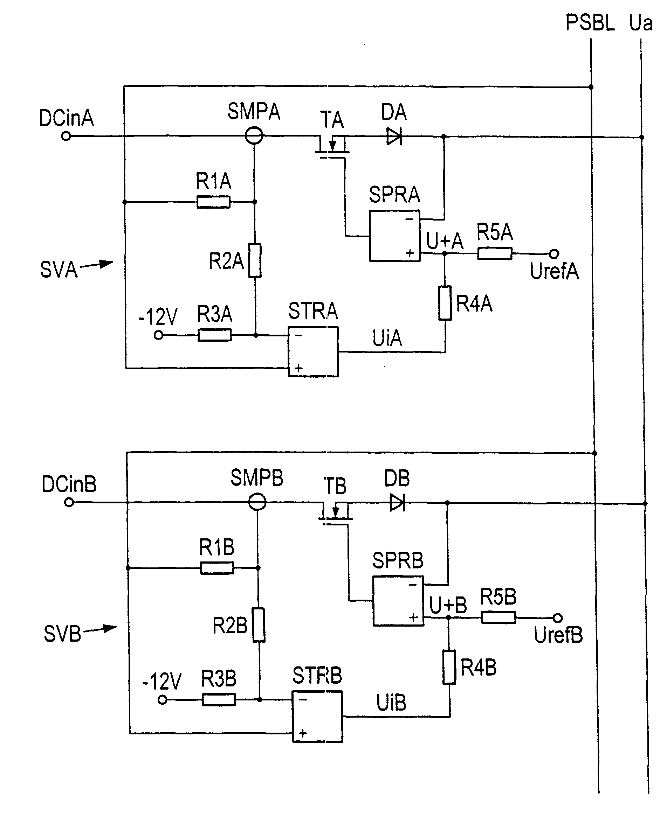

Nachfolgend wird ein Ausführungsbeispiel der Erfindung anhand einer Zeichnung näher erläutert. Darin zeigt die einzige Figur ein Stromversorgungssystem, das mit zwei Stromversorgungseinheiten SVA und SVB aufgebaut ist. Die Anzahl der Stromversorgungseinheiten ist nicht auf die Zahl 2 beschränkt, sondern könnte auch größer sein. In jedem Fall sind die verwendeten Stromversorgungseinheiten identisch aufgebaut.

Von den einzelnen Stromversorgungseinheiten SVA und SVB ist jeweils nur derjenige Teil gezeigt, der für die Nachregelung einer von einem nicht näher dargestellten Hauptteil der jeweiligen Stromversorgungseinheit erzeugten gekoppelten Ausgangsspannung zuständig ist. Bei der gekoppelten Ausgangsspannung der jeweiligen Stromversorgungseinheit SVA bzw. SVB handelt es sich jeweils um die gleiche gekoppelte Ausgangsspannung, die später zu einer gemeinsamen Ausgangsspannung Ua zusammengefasst wird. Insgesamt ist daher vom Spannungswert her nur eine gekoppelte Ausgangsspannung von den jeweiligen Stromversorgungseinheiten SVA bzw. SVB erzeugt.

Die von den Hauptteilen der Stromversorgungseinheiten SVA bzw. SVB erzeugten gekoppelten Ausgangsspannungen werden den jeweiligen nachregelnden Teilen der Stromversorgungseinheiten SVA bzw. SVB als Eingangsspannungen DCinA bzw. DCinB zugeführt. Die Nachregelung erfolgt über Nachregeltransistoren TA bzw. TB.

Die Stromversorgungseinheiten SVA und SVB weisen jeweils eine Ausgangsleitung auf, die jeweils mit einer gemeinsamen Verbindungsleitung verbunden sind. Auf der gemeinsamen Verbindungsleitung wird die gemeinsame Ausgangsspannung Ua durch die einzelnen angeschlossenen Stromversorgungseinheiten SVA und SVB erzeugt.

Die Nachregeltransistoren TA bzw. TB sind in der Ausgangsleitung der jeweiligen Stromversorgungseinheit SVA bzw. SVB angeordnet. Nach den linearen Nachregeltransistoren TA bzw. TB sind in den Ausgangsleitungen weiter jeweilige Entkopplungsdioden DA bzw. DB angeordnet. Die Entkopplungsdioden DA bzw. DB sind in Ausgangsrichtung gepolt.

Die Stromversorgungseinheiten SVA und SVB haben jeweils einen Stromregler STRA bzw. STRB, die jeweils eine Ausgangsspannung UiA bzw. UiB erzeugen. Hierzu sind jeweils ein Minuseingang über einen jeweiligen Widerstand R2A bzw. R2B mit einem Strommesspunkt SMPA bzw. SMPB verbunden, der einen jeweiligen Iststrom der jeweiligen Eingangsspannungen DCinA bzw. DCinB abgreift. Die jeweiligen Minuseingänge der Stromregler STRA bzw. STRB sind weiter über einen jeweiligen Widerstand R3A bzw. R3B mit einer Bezugsspannungsquelle verbunden, die im vorliegenden Fall eine Hilfsspannung von -12V liefert. Die jeweiligen Strommesspunkte SMPA bzw. SMPB sind weiter über einen jeweiligen Widerstand R1A bzw. R1B mit einer gemeinsamen Parallelsteuerbusleitung PSBL und diese jeweils mit dem Pluseingang des jeweils zugehörigen Stromreglers STRA bzw. STRB verbunden. Mit den Widerstandspaaren R2A und R3A bzw. R2B und R3B ist eine Fehlabstimmung bezüglich der Ansteuerung der einzelnen Stromregler STRA und STRB eingestellt, um den Regelkreis, beispielsweise für die Stromversorgungseinheit SVA gebildet aus dem Strommesspunkt SMPA, den Widerständen R1A, R2A, R3A, einem Spannungsregler SPRA und einer Referenzspannung UrefA, trotz aller beteiligten Bauteiltoleranzen auf die höchstmögliche Ausgangsspannung zu bringen. Derjenige Nachregelteil der Stromversorgungseinheiten SVA bzw. SVB, dem die niedrigste Eingangsspannung DCinA bzw. DCinB zugeführt wird, steuert dann seinen Nachregeltransistor TA bzw. TB vollständig durch. Die anderen Stromversorgungseinheiten SVA bzw. SVB stellen sich auf die gleiche gemeinsame Ausgangsspannung Ua ein mit einem Stromanteil, der dem gemittelten Ausgangsstrom pro Stromversorgungseinheit SVA bzw. SVB, und damit einer Spannung auf der Parallelsteuerbusleitung PSBL, einschließlich einem einer Korrekturspannung über dem Widerstand R2A bzw. R2B entsprechenden Stromanteil entspricht.

Die Ausgangsspannungen UiA und UiB der Stromregler STRA und STRB werden jeweils über einen Widerstand R4A bzw. R4B auf einen Pluseingang eines jeweiligen Spannungsreglers SPRA bzw. SPRB geführt. Die Pluseingänge der Spannungsregler SPRA bzw. SPRB sind über jeweilige Widerstände R5A bzw. R5B weiter mit einer jeweiligen Referenzspannungsquelle UrefA bzw. UrefB verbunden. Ein jeweiliger Minuseingang der Spannungsregler SPRA bzw. SPRB ist mit der gemeinsamen Verbindungsleitung verbunden. Ausserdem sind die Ausgänge der Spannungsregler SPRA bzw. SPRB jeweils mit einem Steuereingang eines jeweiligen Nachregeltransistors TA bzw. TB verbunden.

Am Pluseingang der Spannungsregler SPRA bzw. SPRB wird mittels des durch die Widerstände R4A und R5A bzw. R4B und R5B gebildeten Spannungsteilers eine Eingangsspannung U₊A bzw.
U₊B ausgehend von einer Referenzspannung UrefA bzw. UrefB abhängig von der Ausgangsspannung UiA bzw. UiB des jeweiligen Stromreglers STRA bzw. STRB in einer entsprechenden Weise verstimmt. Die Verstimmung ist dabei in der Weise eingestellt, dass der jeweilige Spannungsregler SPRA bzw. SPRB derart eine Ansteuerspannung für den jeweiligen Nachregeltransistor TA bzw. TB erzeugt, dass der jeweilige Nachregeltransistor TA bzw. TB stets eine Ausgangsspannung am Ausgang der jeweiligen Stromversorgungseinheit SVA bzw. SVB liefert, die insgesamt innerhalb eines festgelegten Spannungsfensters liegt.

Fällt nun eine der von den Hauptteilen erzeugte gekoppelte Ausgangsspannung, die den Nachregelteilen als Eingangsspannung DCinA bzw. DCinB zugeführt werden, oder einer der Stromregler STRA bzw. STRB aus, werden die jeweils anderen Stromregler STRB bzw. STRA durch ihre Regelung versuchen, so zu regeln, dass die vorherige Stromaufteilung weiterhin erhalten bleibt. Die anderen Stromregler STRB bzw. STRA können dies nur erreichen, wenn sie ihren jeweiligen Nachregeltransistor TB bzw. TA in der Weise ansteuern, dass ihre jeweilige Ausgangsspannung der defekten Stromversorgungseinheit nach unten folgen. Die Absinkgrenze wird nun durch den jeweiligen zugehörigen Spannungsregler SPRB bzw. SPRA begrenzt, weil dem betreffenden Spannungsregler SPRB bzw. SPRA über den jeweiligen zugehörigen Spannungsteiler R4B, R5B bzw. R4A, R5A am Pluseingang in Verbindung mit der entsprechenden Referenzspannung UrefB bzw. UrefA eine Mindestspannung zugeführt wird. Auf diese Weise wird dem von dem betreffenden Spannungsregler SPRB bzw. SPRA gesteuerten Nachregeltransistor TB bzw. TA noch in dem Maß eine Ansteuerspannung zugeführt, dass der betreffende Nachregeltransistor TB bzw. TA eine Ausgangsspannung liefert, die zwar an einer unteren Grenze eines spezifizierten Spannungsbereichs liegt, die aber immer noch ausreichend hoch ist, um ein an der gemeinsamen Verbindungsleitung der Stromversorgungseinheiten angeschlossenes elektrisches Gerät betreiben zu können.

## Patentansprüche

1. Schaltungsanordnung einer eine gekoppelte, linear nachgeregelte Ausgangsspannung (Ua) liefernden Stromversorgungseinheit, welche parallel zusammenschaltbar ist mit gleichartigen Stromversorgungseinheiten (SVA; SVB)zu einem redundanten Stromversorgungssystem mit auf die jeweiligen Stromversorgungseinheiten (SVA; SVB) gleichmäßig aufgeteilten Ausgangsstromanteilen,
- mit einem die jeweils nachzuregelnde Ausgangsspannung (DCinA; DCinB) auf einer zugehörigen Ausgangsleitung erzeugenden Hauptteil, in dessen Ausgangsleitung ein Nachregeltransistor (TA; TB) und nachfolgend eine in Ausgangsrichtung gepolte Entkopplungsdiode (DA; DB) vorgesehen sind, deren ausgangsseitiger Anschluß für die gemeinsame Ausgangsspannung (Ua) mit einer gemeinsamen Verbindungsleitung verbunden ist, die jeweils die ausgangsseitigen Anschlüsse der Entkopplungsdioden (DA; DB) aller am Stromversorgungssystem beteiligten Stromversorgungseinheiten (SVA; SVB) verbindet,
- und mit einem den Nachregeltransistor (TA; TB) steuernden Stromregler (STRA; STRB), der einen Iststrom auf der Ausgangsleitung des Hauptteils mit einem, über einen Mittelwertbildner (R1A; R1B) in Verbindung mit allen Mittelwertbildner (R1A; R1B) aller am Stromversorgungssystem beteiligten Stromversorgungseinheiten (SVA; SVB) erzeugten Sollstrom unter Abzug einer durch eine Hilfsspannung und einem Widerstandsteiler (R2A, R3A; R2B, R3B) erzeugten Korrekturspannung vergleicht und in Abhängigkeit vom Vergleich den Nachregeltransistor (TA; TB) steuert, **dadurch gekennzeichnet,**
- dass zwischen dem Stromregler (z.B. STRA) und dem Nachregeltransistor (z.B. TA) ein Spannungsregler (z.B. SPRA) angeordnet ist, der eine mit Hilfe einer Ausgangsspannung (z.B. UiA) des Stromreglers (z.B. STRA) und einer Referenzspannung (z.B. UrefA) innerhalb eines eingestellten Bereichs gebildete Sollspannung mit der gemeinsamen Ausgangsspannung (Ua) vergleicht und in Abhängigkeit vom Vergleich den Nachregeltransistor (z.B. TA) steuert,
- und dass der eingestellte Bereich in der Weise eingestellt ist, dass er größer als die zu erwartenden Toleranzen bei einer minimalen Eingangsspannung (z.B. DCinA), der Referenzspannung (z.B. UrefA) und sonstigen die Ausgangsspannung beeinflussenden Spannungen ist.

2. Schaltungsanordnung nach Anspruch 1, **dadurch ge kennzeichnet,** dass der Bereich in der Weise eingestellt ist, dass er kleiner als eine spezifizierte Ausgangsspannungstoleranz ist.

## Claims

1. Circuit arrangement for a power supply unit which supplies a coupled, linearly readjusted output voltage (Ua) and which is connected in parallel with identical power supply units (SVA; SVB) to form a redundant power supply system with output current components which are split uniformly between the respective power supply units (SVA; SVB),
- having a main section which produces the respective output voltage (DCinA; DCinB) to be readjusted on an associated output line and in whose output line a readjustment transistor (TA; TB) and, downstream from it, a decoupling diode (DA; DB) forward-biased in the output direction are provided, whose output-side connection for the common output voltage (Ua) is connected to a common connecting line, which connects the output-side connections of each of the decoupling diodes (DA; DB) of all the power supply units (SVA; SVB) involved in the power supply system,
- and having a current regulator (STRA; STRB) which compares an actual current on the output line of the main section with a nominal current which is produced via an averaging device (R1A; R1B) in conjunction with all the averaging devices (R1A; R1B) of all the power supply units (SVA; SVB) involved in the power supply system, minus a correction voltage produced by an auxiliary voltage and a resistive divider (R2A, R3A; R2B, R3B) and controls the readjustment transistor (TA; TB) as a function of the comparison, characterized
- in that a voltage regulator (for example SPRA) is arranged between the current regulator (for example STRA) and the readjustment transistor (for example TA) and compares a nominal value, which is formed within the said range with the aid of an output voltage (for example UiA) of the current regulator (for example STRA) and a reference voltage (for example UrefA), with the common output voltage (Ua) and controls the readjustment transistor (for example TA) as a function of the comparison,
- and in that the set: range is adjusted in such a manner that it is wider than the tolerances to be expected for a minimum input voltage (for example DCinA), the reference voltage (for example UrefA) and other voltages which influence the output voltage.

2. Circuit arrangement according to Claim 1, **characterized in that** the range is adjusted in such a manner that it is narrower than a specified output voltage tolerance.

## Revendications

1. Circuit d'une unité d'alimentation en courant qui fournit une tension de sortie (Ua) couplée et rajustée de façon linéaire et qui peut être branchée ensemble en parallèle avec des unités d'alimentation en courant de même type (SVA ; SVB) en un système d'alimentation en courant redondant ayant des composantes de courant de sortie distribuées uniformément sur les unités d'alimentation en courant individuelles (SVA ; SVB),
- comprenant une partie principale qui produit sur une ligne de sortie associée la tension de sortie respectivement à rajuster (DCinA ; DCinB) et dans la ligne de sortie de laquelle il est prévu un transistor de rajustement (TA ; TB) et ensuite une diode de découplage polarisée dans le sens de sortie (DA ; DB) dont la borne côté sortie pour la tension de sortie commune (Ua) est reliée à une ligne de liaison commune qui relie à chaque fois les bornes côté sortie des diodes de découplage (DA ; DB) de toutes les unités d'alimentation en courant (SVA ; SVB) participant au système d'alimentation en courant,
- et comprenant un régulateur de courant (STRA ; STRB) qui commande le transistor de rajustement (TA ; TB), qui compare un courant réel sur la ligne de sortie de la partie principale à un courant de consigne, produit par l'intermédiaire d'une formation de valeur moyenne (R1A ; R1B) en liaison avec toutes les formations de valeurs moyennes (R1A ; R1B) de toutes les unités d'alimentation en courant (SVA ; SVB) participant au système d'alimentation en courant, après soustraction d'une tension de correction, produite par une tension auxiliaire et par un diviseur à résistances (R2A, R3A ; R2B, R3B) et qui commande le transistor de rajustement (TA ; TB) en fonction de la comparaison, **caractérisé par le fait que**
- il est placé entre le régulateur de courant (par exemple STRA) et le transistor de rajustement (par exemple TA) un régulateur de tension (par exemple SPRA) qui compare une tension de consigne, formée à l'aide d'une tension de sortie (par exemple UiA) du régulateur de courant (par exemple STRA) et d'une tension de référence (par exemple UrefA) à l'intérieur d'une plage réglée, à la tension de sortie commune (Ua) et qui commande le transistor de rajustement (par exemple TA) en fonction de la comparaison,
- et la plage réglée est réglée de telle sorte qu'elle est plus grande que les tolérances à attendre pour une tension d'entrée minimale (par exemple DCinA), la tension de référence (par exemple UrefA) et d'autres tensions influençant la tension de sortie.

2. Circuit selon la revendication 1, **caractérisé par le fait que** la plage est réglée de telle sorte qu'elle est plus petite qu'une tolérance de tension de sortie spécifiée.
